# EUROPEAN PATENT APPLICATION

(11) **EP 3 466 708 A1**
(43) Date of publication of application: **10.04.2019**
(21) Application number: 17194849.0
(22) Date of filing: 04.10.2017
(51) Int. Cl.: B41M 5/26, C08K 3/04, H01B 3/44, C08K 5/3492

(54) **POLYOLEFIN COMPOSITION FOR ENHANCED LASER PRINTING**

(71) Applicant: Borealis AG, 1220 Vienna (AT)
(72) Inventor: Kulshreshtha, Bhawna, 4020 Linz (AT); Yalalov, Denis, 44430 Stenungsund (SE); Costa, Francis, 4040 Linz (AT)
(74) Representative: Borealis AG

(57) **Abstract**

A polyolefin composition for use as an outer layer of a cable is described, wherein the polyolefin composition comprises a polyolefin and carbon black, wherein the amount of carbon black in the polyolefin composition is 0.25-1 wt%, and wherein the polyolefin composition further comprises a UV agent.

## Description

### TECHNICAL FIELD

The present invention relates to a polyolefin composition, wherein said polyolefin composition comprises a polyolefin, carbon black and UV agent. Further, the present invention relates use of the polyolefin composition as an outer layer of a cable, and to a method of inducing print on an outer layer of a cable.

### BACKGROUND OF THE INVENTION

In the area of communication cables, marking is necessary in order to provide information to the installer, such that the installation is done correctly and efficiently. For fiber optic micro cables (FOC cables), conventional printing techniques like ink jet, embossing etc. are not suitable, since the outer surface of micro cables is not sufficient for providing a print using the conventional techniques. Therefore, use of laser printing techniques is gaining more importance. The increased need for micro cables have also driven customers towards laser printing. One of the advantages of laser printing is that such printing can be performed at higher line speed compared to the alternatives, thus increasing cost-efficiency. Another advantage is that a laser-induced print cannot be erased by rubbing or friction as opposed to ink-jet print. However, with the laser printing technology, there is a challenge of making a good contrast between dark carbon black filled cable jacketing and light marking. Hence, use of laser printing additives (LPA) is required.

EP 0 947 352 discloses a method for printing by means of a laser beam a character on an inside of a mono-component recipient closure, said closure being made of a plastic material comprising between 0,10% by weight and 1,5% by weight of a laser beam absorbent additive.

For cable manufacturers, the in-line mixing of LPA involves an additional step. Therefore, there is a need for a polyolefin composition, which provides better contrast of laser prints and which do not require any additional manufacturing steps.

US 6,207,344 discloses a resin composition having laser marking properties comprising a polycarbonate resin, an effective amount of a copper chromite having a spinel structure and up to 0.05% by weight of the total composition of carbon black, wherein said polycarbonate resin foams in laser struck areas to form light colored markings in the laser struck areas on a dark background.

EP 0 924 095 discloses a method for marking a polyolefin resin is disclosed which comprises irradiating with a YAG laser a polyolefin resin composition containing 0.1 to 1.0 part by weight of carbon black per 100 parts by weight of the polyolefin resin composition, wherein the carbon black has an average secondary particle size of not smaller than 150 nm.

Using polyolefin compositions as the outer layer of a cable implies high demands on the physical properties of the composition, such as flexibility and Environmental Stress Crack Resistance (ESCR). Thus, there is still a need for a polyolefin composition suitable for jacketing applications, wherein the required physical properties are combined with excellent printability by laser irradiation.

### SUMMARY OF THE INVENTION

The present invention relates to a polyolefin composition, wherein the polyolefin composition comprises a polyolefin and carbon black, and wherein the amount of carbon black in the polyolefin composition is 0.25-1 wt%. The polyolefin composition according to the present invention further comprises a UV agent to compensate the lack of carbon black. This polyolefin composition has demonstrated to result in a print having a good contrast during laser marking at high speed. The polyolefin composition of the present invention may be used as an outer layer of a cable.

It should be noted that in jacketing of FOC of prior art, the amount of carbon black is at least 2.5 wt%. This amount of carbon black is necessary in order to provide sufficient UV stability of the jacketing layer.

The base resin comprising 0.25-1 wt% carbon black provides a light-coloured visible marking with good contrast towards dark background of black colour. It is believed that the irradiation from the laser beam decomposes the carbon black into volatile components. These volatile components as well as the absorption of heat from the laser beam foam the surface, which scatters light and leaves a light-colored impression. A polyolefin composition comprising carbon black in the range varying from 0.25 to 1 wt% exhibits a superior performance for laser marking. In the presence of a higher amount of carbon black, laser marking efficiency deteriorates, and when the amount of carbon black is above 1 wt%, poor contrast is achieved.

Preferably, the amount of carbon black in the polyolefin composition is 0.25-0.75 wt%, more preferably 0.25-0.5 wt%.

As mentioned above, it has been noted that at carbon black loadings below 2.5 wt%, degradation of the base resin of the outer layer of FOC caused by UV irradiation may occur. The present invention addresses this problem by providing a polyolefin composition comprising a UV-absorbing agent along with an optimum amount of carbon black. The amount of UV agent may be 0.1-1 wt%, preferably 0.2-0.5 wt% and most preferably 0.2-0.3 wt%. Suitable UV agents are benzoates, triazoles, triazines or hindered amines. Particularly, a mixture of equal amounts of dimethyl succinate polymer with 4-hydroxy-2,2,6,6,-tetramethyl-1-piperidineethanol and Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) (Tinuvin 783 FDL obtained from BASF) may be used as UV-agent.

A suitable polyolefin according to the present invention is the polyolefin having properties required in the technical area of jacketing, i.e. a polyolefin providing low shrinkage, high Environmental Stress Crack Resistance (ESCR) and low Flexural Modulus. Thus, the polyolefin of the present invention preferably has the following ESCR properties: F10 > 1500 h, more preferably > 8000 h; F1 > 700 h, more preferably > 3000 h. The polyolefin according to the present invention may be high density polyethylene (HDPE) or polypropylene.

By "polyolefin" is meant an olefin homopolymer or copolymer. The olefin monomer is preferably selected from ethylene or propylene. The comonomer is preferably selected from α-olefins having 3-12 carbon atoms, more preferably 1-butene, 1-hexene, 4-methyl-1-pentene, and 1-octene, when the olefin monomer is ethylene. When the olefin monomer is propylene the comonomer is preferably selected from ethylene and α-olefins having 4-12 carbon atoms, more preferably ethylene, 1-butene, 1-hexene, 4-methyl-1-pentene, and 1-octene. The polyolefin may be unimodal or multimodal. Preferably, the polyolefin of the present invention is bimodal, more preferably the polyolefin of the present invention is multimodal polyethylene consisting of a low-molecular ethylene homopolymer mixed with a high-molecular copolymer of ethylene and butene, 4-methyl-1-pentene, 1-hexene or 1-octene.

By "polyethylene" or "ethylene (co)polymer" is meant an ethylene homopolymer or copolymer. Similarly, by "polypropylene" or "propylene (co)polymer" is meant a propylene homopolymer or copolymer.

Particularly, the polyolefin according to the present invention may be high density polyethylene (HDPE) or polypropylene.

The polyolefin according to the invention may have a density of about 0.915-0.955 g/cm³, preferably about 0.920-0.950 g/cm³, and a melt flow rate of about 0.2-3.0 g/10 min, preferably about 0.2-2.0 g/10 min.

Polyolefin composition according to the present invention may further comprise antioxidant, such as sterically hindered phenol, phosphorus-based antioxidant, sulphur-based antioxidant, nitrogen-based antioxidant, or mixtures thereof. In particular, a mixture of equal amounts of pentaerythritol tetrakis(3-(3,5-di-tert-butyl-4-hydroxyphenyl)propionate) and tris(2,4-di-tert-butylphenyl) phosphite (Irganox B225) may be used as antioxidant.

Polyolefin composition according to the present invention may further comprise antistatic agent, such as calcium stearate, sodium stearate or zinc stearate.

By using the polyolefin composition of the present invention as the outer layer of a cable, in particular a FOC cable, a clear and distinct print is obtained without the need of adding print enhancers, resulting in a superior and cost-efficient production process and eliminating the shortcomings of the prior art.

The present invention further relates to a method of inducing print on an outer layer of a cable, wherein the outer layer comprises a polyolefin composition comprising a polyolefin and carbon black in the amount of 0.25-1 wt%, and wherein the print is induced by laser radiation. The laser used for the present invention is any conventional laser that may be used for inducing print, and that is well known to a person skilled in the art. The frequency of the laser may be 20-100 kHz, and the power may be 2-50 W, preferably 3-20 W, more preferably 4.65-13 W.

The present invention also relates to an outer layer of a cable, comprising a polyolefin composition comprising a polyolefin and carbon black in the amount of 0.25-1 wt%.

### BRIEF DESCRIPTION OF THE DRAWINGS

Embodiments of the invention will now be described by way of examples with reference to the accompanying drawings, of which:

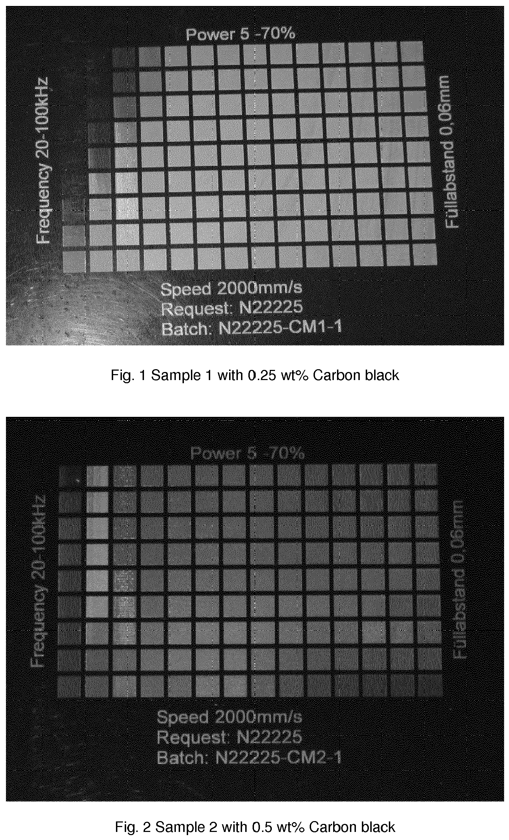

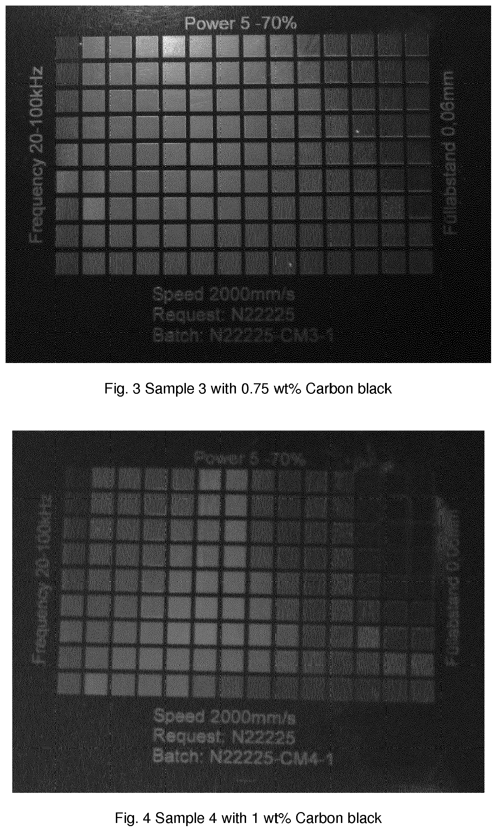

Figs. 1-4 show printed samples with a combination of carbon black and UV agent. The amount of carbon black is 0.25 wt% in Fig. 1, 0.5 wt% in Fig 2, 0.75 wt% in Fig. 3 and 1 wt% in Fig. 4.

### DETAILED DESCRIPTION OF THE INVENTION

### 1. Materials

PE1 is poly(ethylen-co-(1-butene)) copolymer with 39% of carbon black additive
PE2 is bimodal high density polyethylene. The properties of PE2 are summarized in Table 1.

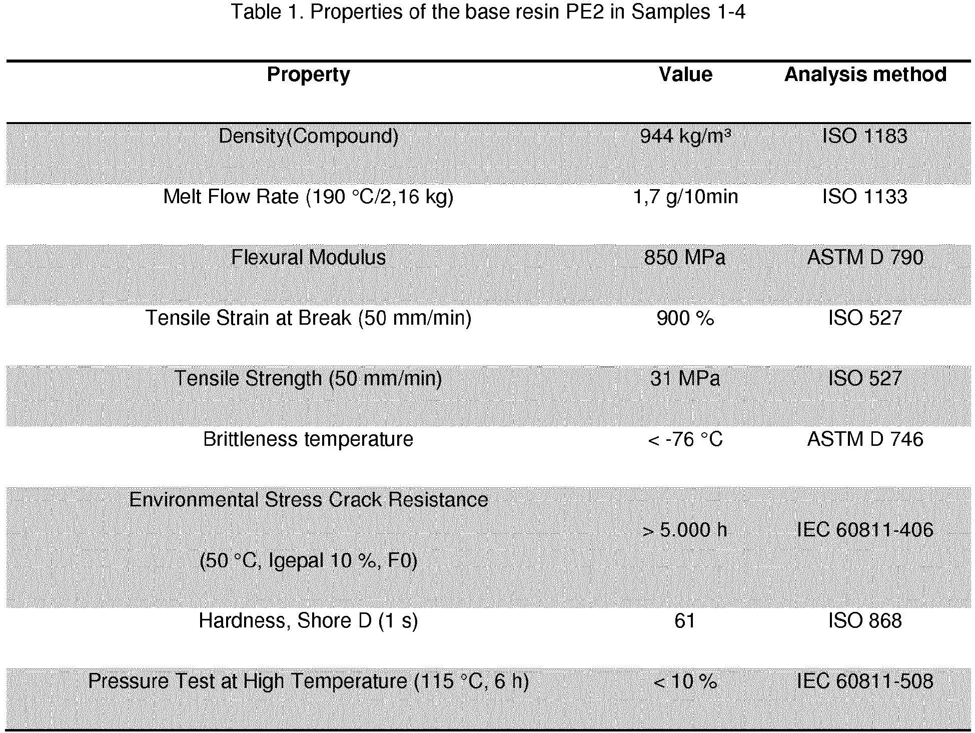

The antioxidant is Irganox B225 obtained from BASF.

The antistatic agent is Ceasit SW (calcium stearate) obtained from Baerlocher.

The UV agent is Tinuvin 783 FDL obtained from BASF.

### 2. Methods

Four samples were prepared using the carbon black masterbatch (MB) in PE1 carrier, wherein the carbon black MB was compounded with polymer base resin PE2, in an amount such that the amount of CB in the final composition is 0.25-1 wt% for Sample 1-4 (Table 2). Compounding was implemented on ZSK 18 MEGAlab laboratory twin screw extruder under the following conditions: speed = 200 rpm; melt temperature 175-190°C; pressure 45-50 bar; output 5kg/h. Plaques of size 150*80*3 mm were produced from the resulting composition using injection moulding on Engel ES 700H/80V/700H/250 3K machine under following conditions: injection speed = 11mm/s; injection time 3.4 sec; switching pressure 66 bar; holding time during backpressure 15 sec; cooling time 20 sec; cycle time 45 sec; melt temperature 150°C; mould temperature 50°C.

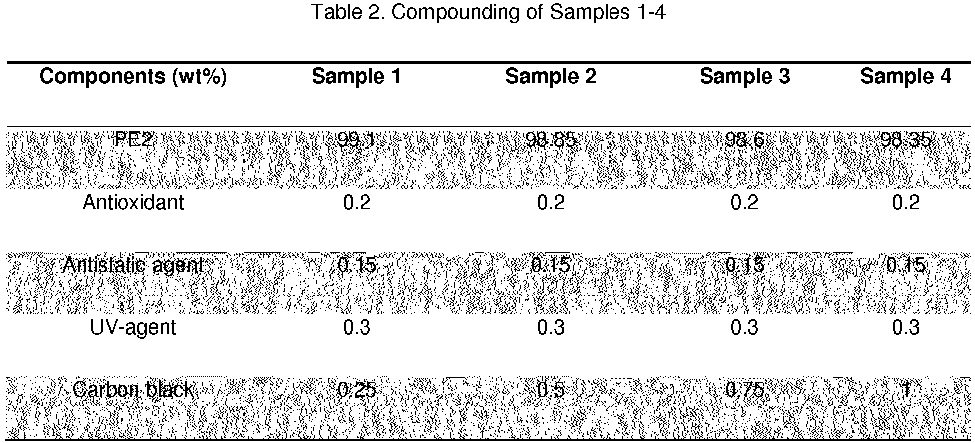

### 3. Results

### Laser Marking Behaviour

Laser marking was carried out using Laser machine, SpeedMarker 700, 20W Fiber laser. For marking, a frequency range of 20-100KHz and power varying between 5-70% of 20W was used. Speed was kept constant at 2000mm/s.

Figures 1-4 show laser printed samples with a combination of different amounts of carbon black and UV agent. Each square represents a combination of frequency to power. The samples are assessed visually by a human being. Best contrast quality is achieved using 0.25% of carbon black (Fig. 1). As may be seen, the contrast becomes poor if the amount of carbon black present exceeds 0.5 wt% (Figs. 3 and 4).

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

## Claims

1. A polyolefin composition, wherein said polyolefin composition comprises a polyolefin and carbon black, wherein carbon black in said polyolefin composition is present in an amount of 0.25-1 wt%, and wherein said polyolefin composition further comprises a UV agent.

2. The polyolefin composition according to claim 1, wherein said UV agent is present in said polyolefin composition in an amount of 0.1-1 wt%.

3. The polyolefin composition according to claim 1 or 2, wherein said UV agent is a mixture of equal amounts of dimethyl succinate polymer with 4-hydroxy-2,2,6,6,-tetramethyl-1-piperidineethanol and poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]).

4. The polyolefin composition according to any one of the preceding claims, wherein said composition further comprises an antioxidant or an antistatic agent, or both.

5. The polyolefin composition according to claim 4, wherein said antistatic agent is stearate.

6. The polyolefin composition according to claim 4, wherein said antioxidant is a mixture of equal amounts of pentaerythritol tetrakis(3-(3,5-di-tert-butyl-4-hydroxyphenyl)propionate) and tris(2,4-di-tert-butylphenyl) phosphite.

7. The polyolefin composition according to any one of the preceding claims, wherein said polyolefin is high density polyethylene (HDPE).

8. The polyolefin composition according to any one of claims 1-6, wherein said polyolefin is polypropylene.

9. The polyolefin composition according to any one of the preceding claims, wherein the amount of carbon black in said polyolefin composition is 0.25-0.75 wt%, preferably 0.25-0.5 wt%.

10. A method of inducing print on an outer layer of a cable, wherein said outer layer comprises a polyolefin composition according to any one of claims 1-9, and said print is induced by laser radiation.

11. The method according to claim 10, wherein the frequency of said laser is 20-100 kHz.

12. The method according to claim 10 or 11, wherein the power of said laser is 2-50 W.

13. An outer layer of a cable, comprising a polyolefin composition according to claims 1-9.

14. Use of a polyolefin composition according to any one of claims 1-9 as an outer layer of a cable.
